# EUROPÄISCHE PATENTSCHRIFT

(11) **EP 1 836 419 B1**
(45) Veröffentlichungstag und Bekanntmachung des Hinweises auf die Patenterteilung: **16.04.2008**
(21) Anmeldenummer: 05850229.5
(22) Anmeldetag: 02.12.2005
(51) Int. Cl.: F16H 61/28, F16H 61/30, F16H 61/32, F16H 63/30, F16H 63/34

(54) **SCHALTEINRICHTUNG FÜR EIN GETRIEBE UND VERWENDUNG EINER SOLCHEN SCHALTEINRICHTUNG**
SHIFTING DEVICE FOR A TRANSMISSION AND USE OF SUCH A SHIFTING DEVICE
DISPOSITIF DE COMMUTATION POUR BOITE DE VITESSES ET UTILISATION D'UN TEL DISPOSITIF DE COMMUTATION

(30) Priorität: 13.01.2005 DE 102005001551
(43) Veröffentlichungstag der Anmeldung: 26.09.2007
(73) Patentinhaber: ZF FRIEDRICHSHAFEN AG, 88038 Friedrichshafen (DE)
(72) Erfinder: BADER, Josef, 88045 Friedrichshafen (DE); RENNER, Stefan, 78351 Bodman-Ludwigshafen (DE); MAYR, Karlheinz, A-6900 Bregenz (AT); KELLER, Reiner, 78351 Ludwigshafen-Bodman (DE); HEINRICH, Kai, 88289 Waldburg (DE)
(86) Internationale Anmeldenummer: PCT/EP2005/012915
(87) Internationale Veröffentlichungsnummer: WO 2006/074759

(56) Entgegenhaltungen:
- EP-A- 1 486 704
- DE-A1- 3 012 764
- DE-A1- 19 901 055
- DE-A1- 19 951 683
- DE-B- 1 286 859
- FR-A- 2 659 410
- US-A- 5 357 821

## Beschreibung

Die vorliegende Erfindung betrifft eine Schalteinrichtung für ein mehrgängiges Schaltgetriebe, gemäß dem Oberbegriff des Patentanspruchs 1.

Schalteinrichtungen für derartige Getriebe sind aus dem Stand der Technik bekannt. Beispielsweise offenbart die DE 199 01 055 A1 der Anmelderin eine Schaltvorrichtung für die Schaltungsbetätigung von Mehrstufenschaltgetrieben mit einer im Wesentlichen parallel zur Räderachse verschiebbaren und in einem Getriebegehäuse angeordneten Schaltwelle, auf der Koppeleinrichtungen angeordnet sind, welche eine Verbindung zwischen der Schaltwelle und Schaltgabeln bzw. Schaltschwingen der zu schaltenden Gänge herstellen. Ferner sind Verriegelungsmittel vorgesehen, die die Schaltgabeln bzw. Schaltschwingen der nicht zu schaltenden Gänge arretieren. Eine weitere Einstangen-Schalteinrichtung ist aus der DE 199 51 683 A1 der Anmelderin bekannt.

Aus dem Stand der Technik ist zudem bekannt, die Schaltabläufe in derartigen Getrieben zu automatisieren, wobei die Bewegung des Schalthebels nicht manuell, sondern durch Aktuatoren ausgeführt wird. Üblicherweise wird ein Schaltaktuator für alle Gassen in Kombination mit einem Wählaktuator verwendet. Hierbei wird die Schaltwelle mittels des Wählaktuators zur Gassenwahl gedreht und über den Schaltaktuator zum Schalten axial verschoben.

Eine bekannte Schalteinrichtung ist als Einschienenschaltung ausgeführt, wobei die axiale Bewegung der Schaltwelle zum Schalten mittels einer eingehängten Kolbenstange erfolgt und der Wählzylinder zur Drehbewegung der Schaltwelle zum Wählen der Gasse quer angeordnet ist. Der Schaltfinger ist verdrehfest auf der Schaltwelle angeordnet. Ferner erfolgt die Mitnahme der Schaltgabeln über Bügel und Kugelbolzen. Des weiteren ist eine Verriegelung vorgesehen, die am Schaltfinger geführt ist.

Getriebe für Nutzkraftfahrzeugen weisen häufig zwölf, sechzehn oder mehr Gänge auf. Derartige Vielganggetriebe sind meist als Mehrgruppengetriebe ausgestaltet, die sich in eine Vorschaltgruppe, eine Hauptgruppe bzw. ein Hauptgetriebe und eine Bereichsgruppe aufteilen. Um den durch die Vielzahl der Gänge entstehenden komplexen Schaltablauf zu erleichtern, weisen die meisten dieser Getriebe eine automatisierte Schalteinrichtung auf. Dabei können die Schaltungen in der Vorschaltgruppe und in der Bereichsgruppe pneumatisch erfolgen, während die Schaltungen im Hauptgetriebe manuell vom Fahrzeugführer durchgeführt werden oder mittels geeigneter elektrohydraulischer, elektropneumatischer und elektromotorischer Stelleinrichtungen oder einer Kombination aus diesen Aktuatoren automatisiert ablaufen.

Aus dem Stand der Technik ist bekannt, das Hauptgetriebe derart auszubilden, dass nur zwei Gassen zur Auswahl der Gänge erforderlich sind. Dies bedeutet, dass nur ein Schaltaktuator für die hohen Kraftanforderungen bei Nkw-Getrieben eingesetzt werden muss, da die zweite Gasse über Wählen durch den gleichen Schaltaktuator betätigbar ist.

Die US-A-5 357 821 offenbart eine Schalteinrichtung enthaltend alle Merkmale des Oberbegriffes des unabhängigen Anspruchs 1.

Der vorliegenden Erfindung liegt die Aufgabe zugrunde, eine automatisierte Schalteinrichtung für ein Getriebe anzugeben, bei der die Kosten und der erforderliche Bauraum reduziert werden. Des weitem sollen die Kraft- und Weganforderungen an die Aktuatorik weitgehend gesenkt werden.

Diese Aufgabe wird erfindungsgemäß durch die Merkmale der unabhängigen Patentansprüche 1 und 12 gelöst. Weitere Ausgestaltungen und Vorteile gehen aus den Unteransprüchen hervor.

Demnach wird eine als Einschienenschalteinrichtung ausgeführte Schalteinrichtung für ein Schaltgetriebe mit einem Wähl- und einem Schaltaktuator vorgeschlagen, umfassend eine Schaltwelle, welche Schaltgabeln bzw. Schaltschwingen umfasst, die in Schiebemuffen zum Schalten der Gänge eingreifen, bei der die Schaltbewegung durch eine axiale Bewegung der Schaltwelle durchführbar ist und die Wählbewegung von der Schaltbewegung kinematisch entkoppelt ist. Hierbei dreht sich bei der Wählbewegung die Schaltwelle nicht.

Die Wählmechanik umfasst einen auf der Schaltwelle verdrehfrei und axial auf der Schaltwelle arretiert angeordneten Mitnehmer- bzw. Schaltfingerring für die Schaltgabelarme, umfassend einen Schaltfinger, der in entsprechende Nuten der Schaltgabelarme eingreift, und ein vom Wählaktuator radial antreibbares und axial nicht bewegliches gehäusefest arretiertes Verriegelungsteil, welches die Wählbewegung auf den Mitnehmer- bzw. Schaltfingerring überträgt und die Schaltgabeln bzw. Schaltschwingen der nicht zu schaltenden Gänge blockiert.

Im Rahmen einer bevorzugten Ausführungsform der Erfindung umfasst das Verriegelungsteil zwei Ringe, durch die die Schaltwelle geführt ist, welche durch einen in etwa parallel zur Längsachse der Schaltwelle verlaufenden Steg miteinander verdrehfest verbunden sind, wobei der Steg eine Längsnut aufweist, in die ein Finger des Schaltfingerringes in Verdrehrichtung spielfrei und axial verschiebbar angeordnet ist. Die Länge der Längsnut ist derart gewählt, dass die durch die axiale Bewegung der Schaltwelle und somit des Schaltfingerringes erzielbare Schaltbewegung durchführbar ist.

Ferner weist der eine Ring des Verriegelungsteiles ein Element auf, das mit dem Wählaktuator in Wirkverbindung steht, derart, dass eine Drehbewegung des Verriegelungsteils um die Schaltwelle und somit des Schaltfingerringes auf der Schaltwelle ermöglicht wird. Der andere Ring ist derart ausgebildet, dass er an derselben Position in Verdrehrichtung wie der Schaltfinger des Schaltfingerringes eine Nut aufweist, durch die bei der Schaltbewegung der jeweilige Schaltgabelarm führbar ist, während eine Bewegung der anderen Schaltgabelarme durch Blechsegmente des Ringes, die in Nuten der Schaltgabelarme eingreifen, blockiert wird.

Durch die erfindungsgemäße Konzeption werden die bei der Schaltung auftretenden Querkräfte in vorteilhafter Weise entkoppelt, was in einer erheblichen Absenkung des zum Wählen erforderlichen Kraftniveaus und somit in der Ermöglichung der Verwendung eines elektromagnetischen oder elektrodynamischen Wählaktuators resultiert; zudem wird der zum Wählen benötigte Weg reduziert. Durch die vorgesehene Verriegelung bzw. Gassenblockierung werden Fehlfunktionen des Wählvorganges verhindert. Der Wählaktuator kann auch durch einen pneumatischen oder hydraulischen Zylinder oder elektromotorisch betätigbar ausgeführt sein, wobei die Verwendung eines elektromagnetischen oder elektrodynamischen Aktuators in vorteilhafter Weise bauraumsparend und kostengünstig ist. Gemäß der Erfindung kann die axiale Bewegung der Schaltwelle über einen integrierten Kolben erfolgen.

Wenn das Getriebe vier Gänge bzw. zwei Gassen aufweist, wie es z. B. bei einem Hauptgetriebe eines Mehrgruppengetriebes der Fall sein kann, kann der elektromagnetisch oder elektrodynamisch betätigbare Wählaktuator besonders einfach aufgebaut sein und zwei Stellungen aufweisen, was insbesondere in Verbindung mit der Verwendung eines elektromagnetischen oder elektrodynamischen Aktuators in einer weiteren erheblichen Kostensenkung resultiert.

Gemäß der Erfindung kann der elektromagnetische Wählaktuator sowohl bei linearer als auch bei rotatorischer Bewegung vorzugsweise als Einfachhubmagnet, Umkehrhubmagnet oder Doppelhubmagnet ausgeführt sein.

Gemäß der Erfindung kann der elektrodynamische Wählaktuator sowohl bei linearer als auch bei rotatorischer Bewegung vorzugsweise als bistabiler Schaltmagnet, Voice-Coil-Aktuator oder Moving-Magnet ausgeführt sein.

Die Erfindung wird im Folgenden anhand der beigefügten Figuren beispielhaft näher erläutert. In diesen stellen dar:
- Fig. 1: eine schematische Schnittansicht einer bevorzugten Ausführungsform der erfindungsgemäßen Schalteinrichtung;
- Fig. 2: zwei weitere schematische Schnittansichten einer bevorzugten Ausführungsform der erfindungsgemäßen Schalteinrichtung und
- Fig. 3: zwei weitere schematische Schnittansichten einer bevorzugten Ausführungsform der erfindungsgemäßen Schalteinrichtung.

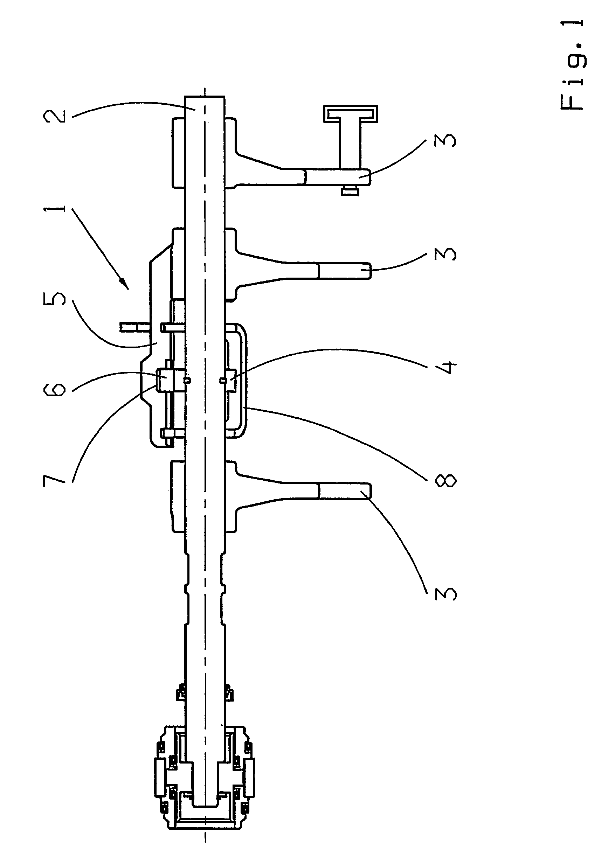

Gemäß Fig. 1 umfasst die erfindungsgemäße Schalteinrichtung 1 eine Schaltwelle 2, die Schaltgabeln bzw. Schaltschwingen 3 umfasst, die in Schiebemuffen zum Schalten der Gänge eingreifen. Erfindungsgemäß ist die Schalteinrichtung 1 derart ausgeführt, dass die Wählbewegung von der Schaltbewegung kinematisch entkoppelt ist; die Schaltbewegung erfolgt durch eine axiale Bewegung der Schaltwelle 2 und die Wählbewegung durch eine Drehbewegung, an der die Schaltwelle 2 nicht beteiligt ist.

Die Wählmechanik umfasst einen auf der Schaltwelle 2 verdrehfrei und axial auf der Schaltwelle arretiert angeordneten Mitnehmer- bzw. Schaltfingerring 4 für die Schaltgabelarme 5, der einen Schaltfinger 6 zum Eingreifen in entsprechende Nuten 7 der Schaltgabelarme 5 aufweist und vorzugsweise als Schnappring ausgeführt sein kann.

Die Wählmechanik umfasst ferner ein von einem Wählaktuator radial antreibbares und axial nicht bewegliches, gehäusefest arretiertes Verriegelungsteil 8, welches die Wählbewegung auf den Mitnehmer- bzw. Schaltfingerring 4 überträgt und die Schaltgabeln bzw. Schaltschwingen 3 der nicht zu schaltenden Gänge blockiert.

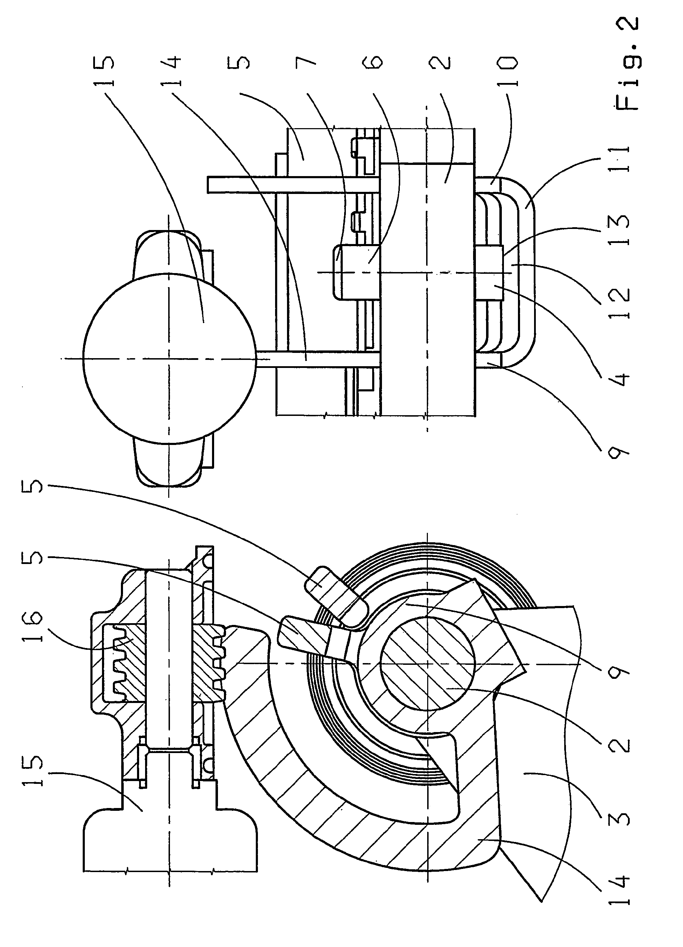

Eine bevorzugte Ausführungsform des Verriegelungsteils ist im rechten Teil der Fig. 2 dargestellt. Das Verriegelungsteil 8 umfasst zwei Ringe 9,10 durch die die Schaltwelle 2 geführt ist, welche durch einen in etwa parallel zur Längsachse der Schaltwelle 2 verlaufenden Steg 11 miteinander verdrehfest verbunden sind. Zwischen den beiden Ringen 9,10 ist der Mitnehmer- bzw. Schaltfingerring 4 angeordnet. Der Steg 11 weist eine Längsnut 12 auf, in die ein Finger 13 des Schaltfingerringes 4 in Verdrehrichtung spielfrei und axial verschiebbar angeordnet ist. Die Länge der Längsnut ist derart gewählt, dass die durch die axiale Bewegung der Schaltwelle 2 und somit des mitgenommenen und nach der Wählbewegung in einer Nut des Schaltgabelarmes 5 des zu schaltenden Ganges eingreifenden Mitnehmer- bzw. Schaltfingerringes 4 erzielbare Schaltbewegung durchführbar ist.

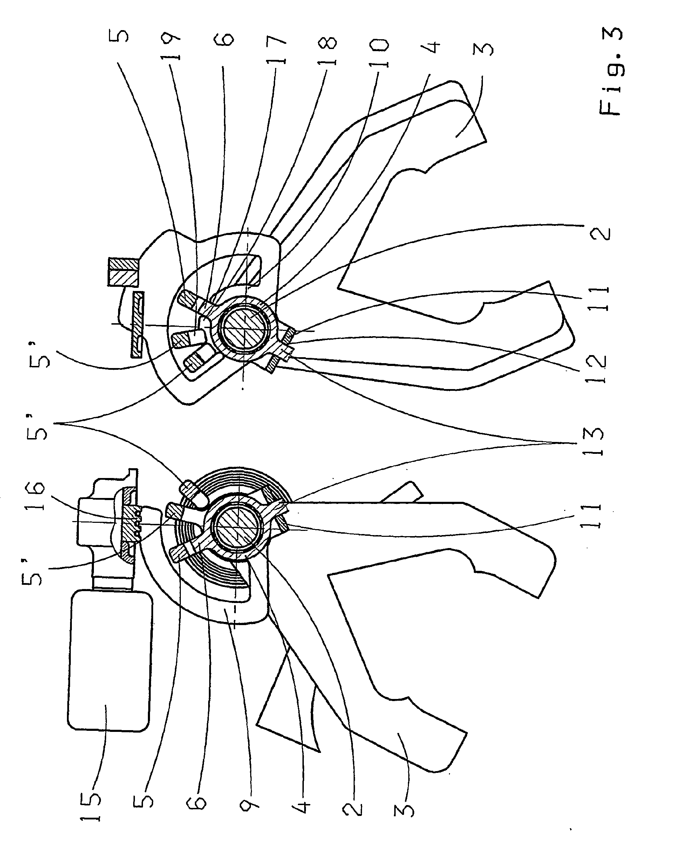

Ferner weist der eine Ring 9 des Verriegelungsteiles 8 ein vorzugsweise bogenförmiges Element 14 auf, das mit dem Wählaktuator 15 beispielsweise über einen Schneckentrieb 16 in Wirkverbindung steht, derart, dass eine Drehbewegung des Verriegelungsteils 8 um die Schaltwelle 2 und somit des Schaltfingerringes 4 auf der Schaltwelle 2 ermöglicht wird. Zwischen dem Wählaktuator und dem Element 14 kann optional ein Umlenkhebel vorgesehen sein. Das Element 14 ist im linken Teil der Fig. 2 sowie im linken Teil der Fig. 3 in einer Seitenansicht dargestellt. In Abhängigkeit von der Ausführung der Schalteinrichtung, wenn nur zwei Gassen vorgesehen sind, kann der Schneckentrieb durch ein einfacher aufgebautes Element ersetzt werden, welches zwei Positionen annehmen kann.

Der andere Ring 10 des Verriegelungsteils 8, der im rechten Teil der Fig. 3 in einer Seitenansicht dargestellt ist, ist derart ausgebildet, dass er an derselben Position in Verdrehrichtung wie der Schaltfinger 6 des Mitnehmer- bzw. Schaltfingerringes 4 eine Nut 17 aufweist, durch die bei der Schaltbewegung der jeweilige gewählte Schaltgabelarm 5 führbar ist, während eine Bewegung der anderen Schaltgabelarme 5' durch Blechsegmente 18 des Ringes 10, die in Nuten 19 der Schaltgabelarme 5' eingreifen, blockiert wird.

Das Verriegelungsteil 8 kann gemäß der Erfindung einstückig ausgebildet sein und nach der Herstellung umgebogen werden, um die gezeigte U-Form zu erhalten. Im Rahmen weiterer nicht dargestellter Ausführungsformen kann der Teil des Verriegelungsteils, der mit dem Wählantrieb in Wirkverbindung steht, in Abhängigkeit von der Bewegungsübertragung andere Formen als die gezeigte annehmen.

Durch die erfindungsgemäße Schalteinrichtung können in vorteilhafter Weise Getriebe, insbesondere Hauptgetriebe von Mehrgruppengetrieben, automatisiert werden, derart, dass die Wählbewegung im Getriebe mechanisch unabhängig von der Wählbewegung des vom Fahrer betätigbaren Schaltknüppels durchführbar ist.

Bei einigen handgeschalteten Gruppengetrieben nach dem Stand der Technik, bei denen eine starre Verbindung zwischen dem Schaltknüppel und der Schaltwelle vorgesehen ist, ergibt sich für den Fahrer ein ungewöhnliches Schaltbild, das keine fließende Schaltbewegung erlaubt, was zu Fehlschaltungen führen kann. Durch Verwendung der erfindungsgemäßen Schalteinrichtung kann dem Fahrer ein ihm gewohntes Schaltbild zur Verfügung gestellt werden. Hierbei ist bei der Umschaltung der Nachschaltgruppe zusätzlich eine Schaltrichtungsumkehr im Getriebe erforderlich, die beispielsweise mittels einer Schwinge realisierbar ist.

Selbstverständlich fällt auch jede konstruktive Ausbildung, insbesondere jede räumliche Anordnung der Bauteile der erfindungsgemäßen Schalteinrichtung an sich sowie zueinander und soweit technisch sinnvoll; unter den Schutzumfang der vorliegenden Ansprüche, ohne die Funktion der Schalteinrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schalteinrichtung
- 2: Schaltwelle
- 3: Schaltgabel, Schaltschwinge
- 4: Mitnehmer- bzw. Schaltfingerring
- 5: Schaltgabelarm
- 6: Schaltfinger
- 7: Nut
- 8: Verriegelungsteil
- 9: Ring
- 10: Ring
- 11: Steg
- 12: Längsnut
- 13: Finger
- 14: bogenförmiges Element
- 15: Wählaktuator
- 16: Schneckentrieb
- 17: Nut
- 18: Blechsegment
- 19: Nut

## Patentansprüche

1. Schalteinrichtung (1) für ein Schaltgetriebe mit einem Wähl- und einem Schaltaktuator, umfassend eine Schaltwelle (2), welche Schaltgabeln (3) bzw. Schaltschwingen umfasst, die in Schiebemuffen zum Schalten der Gänge eingreifen, bei der die Schaltbewegung durch eine axiale Bewegung der Schaltwelle (2) durchführbar ist und die Wählbewegung von der Schaltbewegung kinematisch entkoppelt ist, wobei sich die Schaltwelle (2) bei der Wählbewegung nicht dreht, **dadurch gekennzeichnet, dass** die Wählmechanik der Schalteinrichtung (1) einen auf der Schaltwelle (2) verdrehfrei und axial auf der Schaltwelle (2) arretiert angeordneten Mitnehmer- bzw. Schaltfingerring (4) für mit den Schaltgabeln (3) bzw. Schaltschwingen verbundene Schaltgabelarme (5) umfasst, welcher einen Schaltfinger (6) aufweist, der in entsprechende Nuten (7) der Schaltgabelarme (5) eingreift und ein vom Wählaktuator (15) in Verdrehrichtung antreibbares und axial nicht bewegliches gehäusefest arretiertes Verriegelungsteil (8) umfasst, welches die Wählbewegung auf den Mitnehmer- bzw. Schaltfingerring (4) überträgt und die Schaltgabeln (3) bzw. Schaltschwin-gen der nicht zu schaltenden Gänge blockiert.

2. Schalteinrichtung (1) für ein Schaltgetriebe nach Anspruch 1, **dadurch gekennzeichnet, dass** das Verriegelungsteil (8) zwei Ringe (9, 10) um-fasst, durch die die Schaltwelle (2) geführt ist, welche durch einen in etwa parallel zur Längsachse der Schaltwelle (2) verlaufenden Steg (11) miteinander verdrehfest verbunden sind und zwischen denen der Mitnehmer- bzw. Schaltfingerring (4) angeordnet ist, wobei der Steg (11) eine Längsnut (12) aufweist, in die ein Finger (13) des Schaltfingerringes (4) in Verdrehrichtung spielfrei und axial verschiebbar angeordnet ist und wobei die Länge der Längsnut (12) derart gewählt ist, dass die durch die axiale Bewegung der Schaltwelle (2) und somit des mitgenommenen und in einer Nut des Schaltgabelarmes (5) des zu schaltenden Ganges eingreifenden Mitnehmer- bzw. Schaltfingerringes (4) erzielbare Schaltbewegung durchführbar ist.

3. Schalteinrichtung (1) für ein Schaltgetriebe nach Anspruch 2, **dadurch gekennzeichnet, dass** der eine Ring (9) des Verriegelungsteiles (8) ein Element (14) aufweist, das mit dem Wählaktuator (15) in Wirkverbindung steht, derart, dass eine Drehbewegung des Verriegelungsteils (8) und somit des Schaltfingerringes (4) auf der Schaltwelle (2) zum Wählen ermöglicht wird.

4. Schalteinrichtung (1) für ein Schaltgetriebe nach Anspruch 3, **dadurch gekennzeichnet, dass** zwischen dem Wählaktuator (15) und dem Element (14) ein Umlenkhebel angeordnet ist.

5. Schalteinrichtung (1) für ein Schaltgetriebe nach Anspruch 3 oder 4, **dadurch gekennzeichnet, dass** das Element (14) als bogenförmiges Element ausgebildet ist, das mit dem Wählaktuator (15) über einen Schneckentrieb (16) verbunden ist.

6. Schalteinrichtung (1) für ein Schaltgetriebe nach Anspruch 2, 3, 4 oder 5, **dadurch gekennzeichnet, dass** ein Ring (10) des Verriegelungsteils (8) derart ausgebildet ist, dass er an derselben Position in Verdrehrichtung wie der Schaltfinger (6) des Mitnehmer- bzw. Schaltfingerringes (4) eine Nut (17) aufweist, durch die bei der Schaltbewegung der jeweilige gewählte Schaltgabelarm (5) führbar ist, während eine Bewegung der nicht gewählten Schaltgabelarme (5') durch Blechsegmente (18) des Ringes (10), die in Nuten (19) der nicht gewählten Schaltgabelarme (5') eingreifen, blockiert wird.

7. Schalteinrichtung (1) für ein Schaltgetriebe nach einem der vorangehenden Anspräche, **dadurch gekennzeichnet, dass** der Wählaktuator(15) pneumatisch, hydraulisch, elektromotorisch, elektromagnetisch oder elektrodynamisch betätigbar ausgeführt ist.

8. Schalteinrichtung (1) für ein Schaltgetriebe nach einem der vorangehenden Ansprüche, **dadurch gekennzeichnet, dass** für den Fall, dass zum Schalten zwei Gassen vorgesehen sind, der Wählaktuator (15) derart ausgebildet ist, dass er nur zwei Positionen annimmt.

9. Schalteinrichtung (1) für ein Schaltgetriebe nach Anspruch 8, **dadurch gekennzeichnet, dass** der Wählaktuator (15) ein elektromagnetisch oder elektrodynamisch betätigbarer Aktuator (15) ist.

10. Schalteinrichtung (1) für ein Schaltgetriebe nach einem der vorangehenden Ansprüche, **dadurch gekennzeichnet, dass** für den Fall eines elektromagnetisch betätigbaren Aktuators (15), dieser sowohl bei linearer als auch bei rotatorischer Bewegung als Einfachhubmagnet, Umkehrhubmagnet oder Doppelhubmagnet ausgeführt ist.

11. Schalteinrichtung (1) für ein Schaltgetriebe nach einem der vorangehenden Ansprüche 1 bis 9, **dadurch gekennzeichnet, dass** für den Fall eines elektrodynamisch betätigbaren Aktuators (15) dieser sowohl bei linearer als auch bei rotatorischer Bewegung als bistabiler Schaltmagnet, Voice-Coil-Aktuator oder Moving-Magnet ausgeführt ist.

12. Verwendung einer Schalteinrichtung (1) nach einem der vorangehenden Ansprüche bei einem Getriebe, insbesondere bei einem Hauptgetriebe eines Mehrgruppengetriebes, wobei die Wählbewegung im Getriebe mechanisch unabhängig von der Wählbewegung des vom Fahrer betätigbaren Schaltknüppels durchführbar ist, und dem Fahrer ein ihm gewohntes Schaltbild zur Verfügung gestellt wird.

## Claims

1. Shifting system (1) for a mechanical transmission, with a selector and a shift actuator, including a selector shaft (2) comprising gearshift forks (3) or gearshift levers which engage with sliding sleeves for shifting gears, where the shifting movement can be performed through axial movement of the selector shaft (2) and the selecting movement is kinematically decoupled from the shifting movement, with the selector shaft (2) not turning during the selecting movement, **characterized in that** the selecting mechanism of the shifting system (1) comprises a driving or shifting finger ring (4) arranged on the selector shaft (2) axially locked against rotation for the shift fork arms (5) connected to the gearshift forks (3) or gearshift levers, where this ring (4) has a shifting finger (6) which engages in the corresponding grooves (7) of the shift fork arms (5) and comprises an axially immobile, housing-fixed arrester (8) which can be driven by the selecting actuator (15) in rotation direction, with this arrester transmitting the selecting movement to the driving or shifting finger ring (4) and blocking the gearshift forks (3) or gearshift levers of the gears not to be shifted.

2. Shifting system (1) for a mechanical transmission according to claim 1, **characterized in that** the arrester (8) comprises two rings (9, 10) surrounding the selector shaft (2) and being nonrotationally connected by a web (11) running roughly parallel to the longitudinal axis of the selector shaft (2), and between which the driving or shifting finger ring (4) is arranged, with the web (11) featuring a longitudinal groove (12) in which a finger (13) of the shifting finger ring (4) is arranged with zero play in rotation direction and axially displaceable, with the length of the longitudinal groove (12) being chosen in such a way that the shifting movement realizable through the axial movement of the selector shaft (2) and the entrained driving or shifting finger ring engaging in a groove in the shift fork arm (5) of the gear to be shifted can be carried out.

3. Shifting system (1) for a mechanical transmission according to claim 2, **characterized in that** one ring (9) of the arrester (8) features an element (14) being actively connected to the selecting actuator (15) in such a way that a rotary movement of the arrester (8) and thus of the shifting finger ring (4) on the selector shaft (2) is rendered possible for selecting gears.

4. Shifting system (1) for a mechanical transmission according to claim 3, **characterized in that** a relay lever is arranged between the selecting actuator (15) and the element (14).

5. Shifting system (1) for a mechanical transmission according to claim 3 or 4, **characterized in that** the element (14) is designed as an arch-shaped element which is connected to the selecting actuator (15) by a worm drive (16).

6. Shifting system (1) for a mechanical transmission according to claim 2, 3, 4 or 5, **characterized in that** a ring (10) of the arrester (8) is designed in such a way that it features a groove (17) in the same position in rotational direction as the shifting finger (6) of the driving or shifting finger ring (4), through which the shifting movement of the selected shift fork arm (5) can be guided while movement of the shift fork arms (5) not selected is blocked by sheet-metal segments (18) of the ring (10) engaging in grooves (19) of the shift fork arms (5') not selected.

7. Shifting system (1) for a mechanical transmission according to one of the preceding claims, **characterized in that** the selecting actuator (15) may be actuated pneumatically, hydraulically, by electromotive force, electromagnetically, or electrodynamically.

8. Shifting system (1) for a mechanical transmission according to one of the preceding claims, **characterized in that** where two gates are provided for shifting, the selecting actuator (15) is designed in such a way that it only adopts two positions.

9. Shifting system (1) for a mechanical transmission according to claim 8, **characterized in that** the selecting actuator (15) is an electromagnetically or electrodynamically operated actuator (15).

10. Shifting system (1) for a mechanical transmission according to one of the preceding claims, **characterized in that** where the actuator (15) is actuated electromagnetically, this may involve a single-stroke magnet, a reversible-stroke magnet or a double-stroke magnet for linear as well as rotational movement.

11. Shifting system (1) for a mechanical transmission according to one of preceding claims 1 through 9, **characterized in that** where the actuator (15) is actuated electrodynamically, this may involve a bistable shift magnet, a voice coil actuator or a moving magnet for linear as well as rotational movement.

12. Use of a shifting system (1) according to one of the preceding claims on a transmission, especially on the main transmission of a multiple range-change transmission, with the selecting movement in the transmission being mechanically independent of the selecting movement of the driver-operated shift lever, and the driver being provided with a familiar shift pattern.

## Revendications

1. Dispositif de commutation (1) destiné à une boîte de vitesses mécanique doté d'un actionneur de sélection et d'un actionneur de changement de vitesse. Le dispositif de commutation comprend un arbre de changement de vitesse (2), celui-ci comprenant des fourchettes de changement de vitesse (3) ou des éléments oscillants de changement de vitesse, qui viennent en prise dans des manchons coulissants pour permettre le changement des vitesses, le mouvement de changement de vitesses pouvant s'exécuter grâce à un mouvement axial de l'arbre de changement de vitesse (2), le mouvement de sélection étant découplé d'un point de vue cinématique du mouvement de changement de vitesse, sachant que l'arbre de changement de vitesse (2) ne tourne pas lors du mouvement de sélection, **caractérisé en ce que** le mécanisme de sélection du dispositif de commutation (1) comprend un entraîneur ou une bague d'un doigt de commande (4) pour des baladeurs (5) liés aux fourchettes de changement de vitesse (3) ou les éléments oscillants de changement de vitesse, l'entraîneur ou la bague dun doigt de commande (4) étant disposés sur l'arbre de changement de vitesse (2) de façon libre en rotation et verrouillée axialement sur l'arbre de changement de vitesse (2), l'entraîneur comportant un doigt de commande (6), celui-ci s'engageant dans des cannelures (7) des baladeurs des fourchettes de changement de vitesse (5) et comprenant un élément de verrouillage (8) qui peut être entraîné par l'actionneur de sélection (15) dans le sens de torsion et qui ne peut pas être déplacé axialement, qui est fixé au carter et verrouillé, l'élément de verrouillage transmettant le mouvement de sélection à l'entraîneur ou à la bague du doigt de commande (4) et bloquant les fourchettes de changement de vitesse (3) ou les basculeurs des fourchettes de changement de vitesse des rapports qui ne doivent pas être engagés.

2. Dispositif de commutation (1) destiné à une boîte de vitesses mécanique selon la revendication 1, **caractérisé en ce que** l'élément de verrouillage (8) comprend deux bagues (9, 10), à travers lesquelles passe l'arbre de changement de vitesse (2), ces bagues étant liées de façon solidaire en rotation par l'intermédiaire dune nervure (11) étant disposée à peu près parallèlement par rapport à l'axe longitudinal de l'arbre de changement de vitesse (2) et entre lesquelles est disposé l'entraîneur ou la bague du doigt de commande (4), sachant que la nervure (11) comporte une cannelure longitudinale (12), dans laquelle est disposé un doigt (13) de la bague du doigt de commande (4) en sens de torsion, sans jeu et de façon à pouvoir être déplacé axialement, et sachant que la longueur de la cannelure longitudinale (12) est définie de façon à ce qu'il est possible de réaliser le mouvement de changement de vitesse ciblé par le mouvement axial de l'arbre de changement de vitesse (2) et ainsi par l'entraîneur ou la bague du doigt de commande (4) entraînés et s'engageant dans une cannelure du basculeur de la fourchette de changement de vitesse (5) du rapport à engager.

3. Dispositif de commutation (1) destiné à une boîte de vitesses mécanique selon la revendication 2, **caractérisé en ce que** l'une des bagues (9) de l'élément de verrouillage (8) comporte un élément (14) étant lié activement à l'actionneur de sélection (15), et cela de façon à ce que l'élément de verrouillage (8) et ainsi la bague du doigt de commande (4) sur l'arbre de changement de vitesse (2) puissent réaliser un mouvement rotatif de sélection.

4. Dispositif de commutation (1) destiné à une boîte de vitesses mécanique selon la revendication 3, **caractérisé en ce que** entre l'actionneur de sélection (15) et l'élément (14) est disposé un levier de renvoi.

5. Dispositif de commutation (1) destiné à une boîte de vitesses mécanique selon les revendications 3 ou 4, **caractérisé en ce que** l'élément (14) est réalisé comme élément en forme darc étant lié à l'actionneur de sélection (15) par l'intermédiaire d'un réducteur à vis sans fin (16).

6. Dispositif de commutation (1) destiné à une boîte de vitesses mécanique selon les revendications 2, 3, 4 ou 5, **caractérisé en ce qu'**une bague (10) de l'élément de verrouillage (8) est réalisée de façon à ce qu'elle comporte en sens de torsion une cannelure (17) dans la même position du doigt de commande (6) de l'entraîneur ou de la bague du doigt de commande (4), cette cannelure permettant de guider lors du mouvement de changement de vitesse le basculeur de la fourchette de changement de vitesse respectivement sélectionné (5), tandis que tout mouvement des basculeurs des fourchettes de changement de vitesse pas sélectionnés (5') est bloqué par des segments en tôle (18) de la bague (10), ceux-ci s'engageant dans les cannelures (19) des basculeurs des fourchettes de changement de vitesse pas sélectionnés (5').

7. Dispositif de commutation (1) destiné à une boîte de vitesses mécanique selon une des revendications précédentes, **caractérisé en ce que** l'actionneur de sélection (15) est réalisé de façon à ce qu'il puisse être actionné par voie pneumatique, hydraulique, électromagnétique, électrodynamique ou par un moteur électrique.

8. Dispositif de commutation (1) destiné à une boîte de vitesses mécanique selon une des revendications précédentes, **caractérisé en ce que** dans le cas où pour le changement de vitesse sont prévus deux couloirs, l'actionneur de sélection (15) est réalisé de façon à ce qu'il ne puisse occuper que deux positions.

9. Dispositif de commutation (1) destiné à une boîte de vitesses mécanique selon la revendication 8, **caractérisé en ce que** l'actionneur de sélection (15) est un actionneur (15) qui peut être activé par voie électromagnétique ou électrodynamique.

10. Dispositif de commutation (1) destiné à une boîte de vitesses mécanique selon une des revendications précédentes, **caractérisé en ce que** pour le cas où le dispositif est doté d'un actionneur commandé par voie électromagnétique (15), celui-ci est réalisé - soit en cas d'un mouvement linéaire soit en cas dun mouvement rotatif - comme électro-aimant de levage à simple course, électro-aimant de levage à inversion ou électro-aimant de levage à double course.

11. Dispositif de commutation (1) destiné à une boîte de vitesses mécanique selon une des revendications précédentes 1 à 9, **caractérisé en ce que** pour le cas où le dispositif est doté d'un actionneur commandé par voie électrodynamique (15), celui-ci est réalisé - soit en cas d'un mouvement linéaire soit en cas dun mouvement rotatif - comme électro-aimant de commutation bistable, comme actionneur voice-coil ou comme aimant mobile.

12. Utilisation du dispositif de commutation (1) selon une des revendications précédentes sur une boîte de vitesses, notamment sur une boîte de base dune transmission à plusieurs groupes, sachant que le mouvement de sélection à l'intérieur de la boîte de vitesses peut être effectué mécaniquement et indépendamment du mouvement de sélection du levier de changement de vitesses actionné par le chauffeur, et sachant qu'au chauffeur est mis à disposition une grille de changement de vitesses configurée selon ses souhaits.
